# EUROPEAN PATENT SPECIFICATION

(11) **EP 3 578 701 B1**
(45) Date of publication and mention of the grant of the patent: **27.01.2021**
(21) Application number: 19178412.3
(22) Date of filing: 05.06.2019
(51) Int. Cl.: D04H 1/02, B27N 3/00, B27N 3/04, B27N 3/12, D04H 1/425, E04B 1/78, E04B 1/94, F16L 59/02, D04H 1/4274, D04H 1/542, D04H 1/554, D04H 1/558

(54) **METHOD OF MANUFACTURING A FLAME-RETARDANT HEAT INSULATING FORMED PRODUCT**
VERFAHREN ZUR HERSTELLUNG EINES FLAMMHEMMENDEN WÄRMEDÄMMENDEN GEFORMTEN PRODUKTS
PROCÉDÉ DE FABRICATION D'UN PRODUIT FORMÉ IGNIFUGE À ISOLATION THERMIQUE

(30) Priority: 07.06.2018 JP 2018109259
(43) Date of publication of application: 11.12.2019
(73) Proprietor: Yamada, Masao, Akishima-shi, Tokyo 196-0025 (JP)
(72) Inventor: Yamada, Masao, Akishima-shi, Tokyo 196-0025 (JP)
(74) Representative: SSM Sandmair

(56) References cited:
- EP-A1- 0 560 608
- EP-A1- 1 589 147
- JP-A- H 068 969
- JP-A- 2017 089 208

## Description

### Technical Field

The present invention relates to a method of manufacturing a flame-retardant heat insulating formed product in the shape of a mat and the like.

### Background Art

As heat insulating materials used in a wall, ceiling and the like of a structure, glass wool, rock wool and the like, which are inexpensive and good in workability, are used. However, the glass wool and the like have problems with a hygiene perspective, and since recycling is difficult, are not good for the environment.

On the other hand, cellulose fibers obtained by defibrating paper such as used paper are excellent as heat insulating materials, but are expensive. Further, in construction, since work is performed by a blowing scheme, dust tends to occur and is bad for the environment, and there is a drawback that workability is poor.

In view of the aforementioned respect, as heat insulating materials of structures, glass wool and the like are used in almost construction examples.

In terms of such a background, the inventor of the present invention improved problems of conventional heat insulating materials, and has proposed a heat insulating material which has a sound insulation effect and flame-retardant effect, and is excellent in construction workability and economic efficiency. Further, the heat insulating material enables the material to be recycled, and therefore, is also excellent in environmental characteristics (see Patent Document 1).

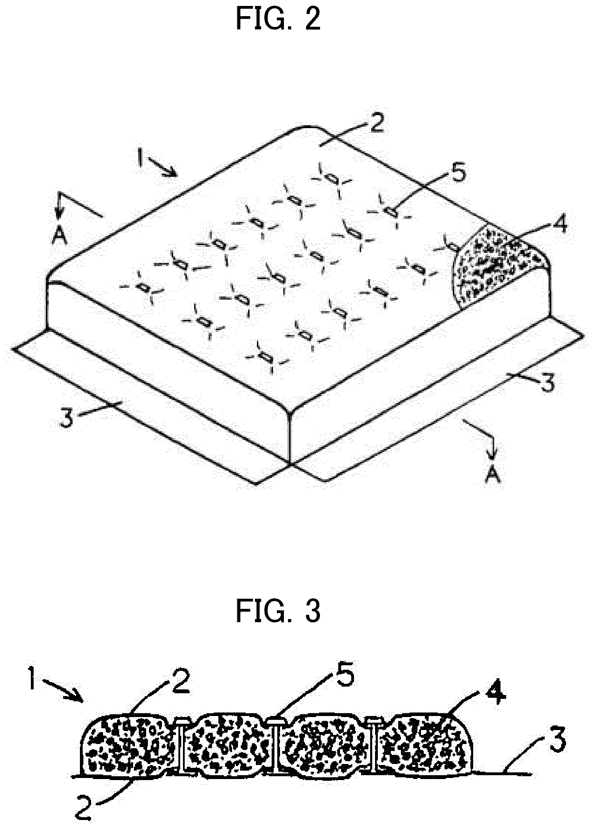

The general outlines of the proposed heat insulating material are as described below.
(1) A heat insulating material prepared by stirring and mixing cellulose fibers obtained by defibrating paper and cotton-shaped synthetic fibers with polypropylene as the main ingredient, and further mixing boric acid and borax.
(2) A mat-shaped formed product for storing the above-mentioned heat insulating material to apply the heat insulating material to a wall and ceiling of a structure (see FIGs. 2 and 3).

### (Manufacturing of the heat insulating material)

(1) Paper such as usedpaper is defibrated to prepare cellulose fibers.
(2) Synthetic fibers with polypropylene as the main ingredient are prepared and crushed into cotton shapes.
(3) The heat insulating material of a structure is obtained by stirring and mixing the cellulose fibers prepared in the step of above-mentioned (1) and cotton-shaped synthetic fibers with polypropylene as the main ingredient prepared in the step of above-mentioned (2). Further, boric acid and borax are mixed.

### (Manufacturing of the mat-shaped formed product)

Manufacturing of the mat-shaped formed product filled with the heat insulating material as a loose material will be described with reference to FIGs. 2 and 3.

FIG. 2 is a perspective view of the mat-shaped formed product, and FIG. 3 is a cross-sectional view along the line A-A of FIG. 2.

Three end portions of a bag body 2 of two overlapped nonwoven fabric, paper, film or the like are joined by a method using sewing, melting, adhesive or the like. An opened end portion of the bag body 2 is opened to fill with a loose material 4 made of the heat insulating material, and the opened end portion is joined by a method using sewing, melting, adhesive or the like to prepare the mat-shaped formed product.

### Prior Art Document

### Patent Document

[Patent Document 1] Japanese Unexamined Patent Publication No. 2017-89208

### Disclosure of Invention

### Problems to be Solved by the Invention

In the method of manufacturing the formed product shown in FIGs. 2 and 3 proposed previously, since the following steps are required, there has been a drawback that the formed product is high in cost.
(1) Step of joining three end portions of a bag body 2 of two overlapped nonwoven fabric, paper, film or the like by a method using sewing, melting, adhesive or the like.
(2) Step of opening an opened end portion of the bag body 2 to fill with a loose material 4, and joining the opened end portion by a method using sewing, melting, adhesive or the like.

Accordingly, it is an object of the present invention to provide a method of manufacturing a flame-retardant heat insulating formed product in the shape of a mat and the like which has a sound insulation effect, is excellent in environmental characteristics and is excellent in economic efficiency with the manufacturing steps simplified.

### Means for Solving the Problem

The means for attaining the object of the present invention is as described below.
(1) A method of manufacturing a flame-retardant heat insulating formed product, including the step of pouring water in used paper or a pulp material to defibrate and obtain defibrated cotton, the step of charging a flame retardant into the defibrated cotton, and by stirring and heating, obtaining flame-retardant heat insulating defibrated cotton, the step of charging short fibers with a low melting point into the flame-retardant heat insulating defibrated cotton, and by mixing and stirring, obtaining a flame-retardant heat insulating loose material, the step of filling a forming die made of paper provided with a lid with the flame-retardant heat insulating loose material, the step of heating the flame-retardant heat insulating loose material together with the forming die with a microwave heating apparatus to form, and the step of removing a formed product from the forming die.
(2) The method of manufacturing a flame-retardant heat insulating formed product as described in (1), characterized in that the forming die made of paper is a forming die made of corrugated cardboard.
(3) The method of manufacturing a flame-retardant heat insulating formed product as described in (1) or (2), characterized in that the lid of the forming die is a lid having an air vent.
(4) The method of manufacturing a flame-retardant heat insulating formed product as described in any one of (1) to (3), characterized in that the flame retardant is a boric acid or boron.
(5) The method of manufacturing a flame-retardant heat insulating formed product as described in any one of (1) to (4), characterized in that the short fibers with a low melting point are made of polyester, polyethylene or polypropylene.
(6) The method of manufacturing a flame-retardant heat insulating formed product as described in any one of (1) to (5), characterized in that the flame-retardant heat insulating formed product is a mat-shaped formed product.

### Advantageous Effect of the Invention

According to the present invention, raw materials of the forming die to manufacture the flame-retardant heat insulating formed product may be paper such as corrugated cardboard commonly used in packing and the like. Then, since a forming die formed from a metal die or wood die is not used, it is possible to promptly manufacture the forming die, and to obtain the flame-retardant heat insulating formed product having the sound insulation effect at very low cost.

### Brief Description of Drawings

FIG. 1 contains schematic diagrams to explain a method of manufacturing a flame-retardant heat insulating formed product according to the present invention;
FIG. 2 is a perspective view of a mat-shaped formed product filled with a heat insulating material as a loose material; and
FIG. 3 is a cross-sectional view along the line A-A of FIG. 2.

### Best Mode for Carrying Out the Invention

A mat-shaped flame-retardant heat insulating formed product will be exemplified as a flame-retardant heat insulating formed product to describe a manufacturing method thereof.

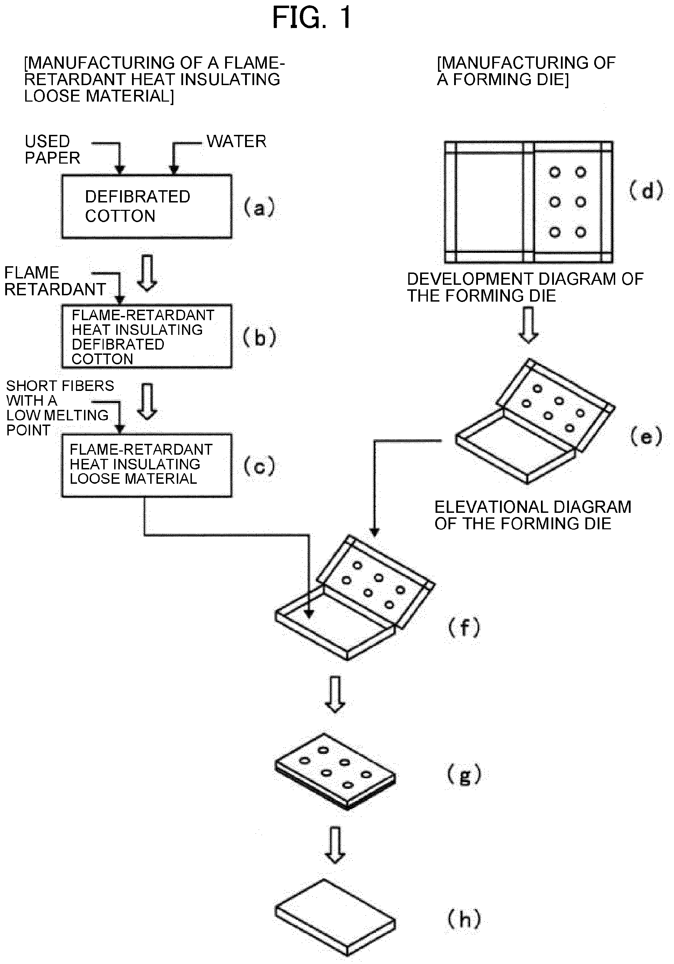

FIGs. 1A to 1C are schematic diagrams to explain steps up to manufacturing of a flame-retardant heat insulating loose material.

Further, FIGs. 1D and 1E are schematic diagrams to explain steps up to manufacturing of a forming die made of paper, and FIGs. 1F to 1H are schematic diagrams to explain steps of from filling the prepared forming die made of paper with the flame-retardant heat insulating loose material to obtaining a flame-retardant heat insulating formed product.

### (Manufacturing of the flame-retardant heat insulating loose material)

In manufacturing of the flame-retardant heat insulating loose material, as shown in FIG. 1A, first, water is poured in used paper or a pulp material to defibrate and obtain defibrated cotton.

Next, as shown in FIG. 1B, a flame retardant such as boric acid and boron is charged into the defibrated cotton, and by stirring and heating, flame-retardant heat insulating defibrated cotton is obtained.

Further, as shown in FIG. 1C, short fibers with a low melting point such as polyester, polyethylene and polypropylene are charged into the flame-retardant heat insulating defibrated cotton, and by mixing and stirring, the flame-retardant heat insulating loose material is obtained.

### (Manufacturing of the forming die)

The forming die is provided with a lid having a plurality of air vents, and is configured to be structure where the thickness is thin, as compared with the vertical and horizontal lengths.

Corrugated cardboard made of paper commonly used in packing and the like is prepared, is subjected to cutting creasing processing according to a development diagram as shown in FIG. 1D as one example, and next, is built to be the forming die made of paper having a lid as shown in FIG. 1E.

One example of the forming die made of paper is as shown in FIG. 1E, and various shapes are considered as its shape, and are selected as appropriate corresponding to a shape of a required flame-retardant heat insulating formed product.

It is preferable that the thickness of the corrugated cardboard required of the forming die is about 3 mm in the case where the sum of vertical and horizontal lengths and thickness is about 100 cm, is about 5 mm in the case where the sum ranges from about 100 cm to 150 cm, and is 5 mm or more in the case where the sum is 150 cm or more.

In addition, in the case of the low number of production lots, corrugated cardboard with a thickness of 3 mm may be used.

### (Manufacturing of the flame-retardant heat insulating formed product)

As shown in FIG. 1F, after filling the forming die made of paper with the flame-retardant heat insulating loose material and compressing, the lid is put on. The lid of the forming die is to prevent the filled flame-retardant heat insulating loose material from being dissipated from the upper portion, at the time of carrying and at the time of microwave heating.

Further, the lid of the forming die has an effect of promoting forming by heating, on average, the flame-retardant heat insulating loose material filled with steam heat at the time of microwave heating.

Next, as shown in FIG. 1G, the lidded forming die filled with the flame-retardant heat insulating loose material is heated with a microwave heating apparatus.

At the time of microwave heating, moisture of the flame-retardant heat insulating loose material is heated and vaporized. Therefore, the lid of the forming die is provided with air vents for ventilation. It is preferable that the diameter of the air vent is about 5 mm, and that a plurality of vents is provided at intervals ranging from 2 cm to 5 cm.

The short fiber with a low melting point contained in the flame-retardant heat insulating loose material reaches a melting point by heating at a temperature of 110°C or more. By fusing of the short fiber with a low melting point, the flame-retardant heat insulating loose material is mutually joined. After heating and forming with the microwave heating apparatus, the mat-shaped formed product is removed from the forming die, and by natural cooling, the mat-shaped flame-retardant heat insulating formed product is obtained as shown in FIG. 1H.

### (Embodiment)

One example of a manufacturing process of the mat-shaped formed product is as described below.
(1) In 1 kg of used paper or pulp material, water is poured in a weight ratio of 30% to 45%, and the resultant is defibrated for 120 seconds to 300 seconds to be defibrated cotton.
(2) Into the defibrated cotton is charged 150 g of boric acid, the resultant is stirred and heated for 60 seconds to impregnate, and flame-retardant heat insulating defibrated cotton is obtained.
(3) Into the flame-retardant heat insulating defibrated cotton is charged 300 g to 800 g (30% to 80% in a weight ratio) of short fibers with a low melting point, and the resultant is mixed and stirred for 60 seconds to obtain a flame-retardant heat insulating loose material.
(4) A beforehand prepared forming die made of corrugated cardboard provided with a lid having air vents is filled with the flame-retardant heat insulating loose material.
(5) The flame-retardant heat insulating loose material is heated together with the forming die with a microwave heating apparatus at a temperature of 110°C or more for 120 seconds to 600 seconds.
(6) The flame-retardant heat insulating formed product made the shape of a mat is removed from the forming die, and is subjected to natural cooling.

In addition, in the present Description, the method of manufacturing a mat-shaped formed product is exemplified and described as the Embodiment, but the formed product according to the present invention is not limited to the mat-shaped product.

It is needless to say that any appropriate design modification is capable of being made to manufacturing of the flame-retardant heat insulating formed product, without departing from the scope of the claims.

## Claims

1. A method of manufacturing a flame-retardant heat insulating formed product, including:
pouring water in used paper or a pulp material to defibrate and obtain defibrated cotton;
charging a flame retardant into the defibrated cotton, and by stirring and heating, obtaining flame-retardant heat insulating defibrated cotton;
charging short fibers with a low melting point into the flame-retardant heat insulating defibrated cotton, and by mixing and stirring, obtaining a flame-retardant heat insulating loose material;
filling a forming die made of paper provided with a lid with the flame-retardant heat insulating loose material;
heating the flame-retardant heat insulating loose material together with the forming die with a microwave heating apparatus to form; and
removing a formed product from the forming die.

2. The method of manufacturing a flame-retardant heat insulating formed product according to claim 1, wherein the forming die made of paper is a forming die made of corrugated cardboard.

3. The method of manufacturing a flame-retardant heat insulating formed product according to claim 1 or 2, wherein the lid of the forming die has an air vent.

4. The method of manufacturing a flame-retardant heat insulating formed product according to any one of claims 1 to 3, wherein the flame retardant is a boric acid or boron.

5. The method of manufacturing a flame-retardant heat insulating formed product according to any one of claims 1 to 4, wherein the short fibers with a low melting point are made of polyester, polyethylene or polypropylene.

6. The method of manufacturing a flame-retardant heat insulating formed product according to any one of claims 1 to 5, wherein the flame-retardant heat insulating formed product is a mat-shaped formed product.

## Patentansprüche

1. Verfahren zur Herstellung eines feuerbeständigen, wärmeisolierend geformten Produktes, das enthält:
Wasser wird in gebrauchtes Papier oder ein Pulpenmaterial gegossen, um es zu zerfasern und zerfaserte Wolle zu erhalten;
entfaserte Wolle geladen, und durch Rühren und Erhitzen wird eine feuerbeständige, wärmeisolierende zerfaserte Wolle erhalten;
kurze Fasern mit einem hohen Schmelzpunkt werden in die feuerbeständige, wärmeisolierende zerfaserte Wolle geladen, und durch Mischen und Rühren wird ein feuerbeständiges, wärmeisolierendes loses Material erhalten;
ein Umformungswerkzeug, das aus Papier hergestellt ist, das mit einem Deckel versehen ist, wird mit dem feuerbeständigen, wärmeisolierenden losen Material gefüllt;
das feuerbeständige, wärmeisolierende lose Material wird zusammen mit dem Umformungswerkzeug mit einem Mikrowellenerhitzungsgerät zur Formung erhitzt; und
das geformte Produkt wird aus dem Umformungswerkzeug entnommen.

2. Verfahren zum Herstellen eines feuerbeständigen, wärmeisolierend geformten Produkt gemäß Anspruch 1, wobei das Umformungswerkzeug, das aus Papier hergestellt ist, ein Umformungswerkzeug ist, das aus einer gewellten Pappe gemacht ist.

3. Verfahren zur Herstellung eines feuerbeständigen, wärmeisolierend geformten Produktes gemäß Anspruch 1 oder 2, wobei der Deckel des Umformungswerkzeug eine Entlüftung hat.

4. Verfahren zum Herstellen eines feuerbeständigen, wärmeisolierend geformten Produktes gemäß irgendeinem der Ansprüche 1 bis 3, wobei das feuerbeständige Material eine Borsäure oder Bor ist.

5. Verfahren zum Herstellen eines feuerbeständigen, wärmeisolierend geformten Produktes gemäß einem der Ansprüche 1 bis 4, wobei die kurzen Fasern mit einem niedrigen Schmelzpunkt aus Polyester, Polyethylen oder Polypropylen hergestellt sind.

6. Verfahren zum Herstellen eines feuerbeständigen, wärmeisolierend geformten Produktes gemäß einem der Ansprüche 1 bis 5, wobei das feuerbeständige, wärmeisolierend geformte Produkt ein mattenförmiges Produkt ist.

## Revendications

1. Procédé de fabrication d'un produit formé ignifuge-calorifuge, incluant :
le versement d'eau dans du papier usagé ou un matériau de pâte pour défibrer et obtenir du coton défibré ;
la charge d'un ignifuge dans le coton défibré, et par agitation et chauffage, l'obtention de coton défibré ignifuge-calorifuge ;
la charge de fibres courtes avec un bas point de fusion dans le coton défibré ignifuge-calorifuge, et, par mélangeage et agitation, l'obtention d'un matériau en vrac ignifuge-calorifuge ;
le remplissage d'une matrice de formage, faite de papier pourvue d'un couvercle, avec le matériau en vrac ignifuge-calorifuge ;
le chauffage du matériau en vrac ignifuge-calorifuge, conjointement à la matrice de formage, avec un appareil de chauffage à micro-ondes pour former ; et
l'enlèvement d'un produit formé à partir de la matrice de formage.

2. Procédé de fabrication d'un produit formé ignifuge-calorifuge selon la revendication 1, dans lequel la matrice de formage faite de papier est une matrice de formage faite de carton ondulé.

3. Procédé de fabrication d'un produit formé ignifuge-calorifuge selon la revendication 1 ou 2, dans lequel le couvercle de la matrice de formage a un évent.

4. Procédé de fabrication d'un produit formé ignifuge-calorifuge selon l'une quelconque des revendications 1 à 3, dans lequel l'ignifuge est un acide borique ou du bore.

5. Procédé de fabrication d'un produit formé ignifuge-calorifuge selon l'une quelconque des revendications 1 à 4, dans lequel les fibres courtes avec un bas point de fusion sont faites de polyester, de polyéthylène ou de polypropylène.

6. Procédé de fabrication d'un produit formé ignifuge-calorifuge selon l'une quelconque des revendications 1 à 5, dans lequel le produit formé ignifuge-calorifuge est un produit formé en forme de tapis.
